# EUROPEAN PATENT APPLICATION

(11) **EP 1 577 074 A1**
(43) Date of publication of application: **21.09.2005**
(21) Application number: 05102064.2
(22) Date of filing: 16.03.2005
(51) Int. Cl.: B29C 47/22, B29C 47/92

(54) **Extrusion Die**

(30) Priority: 17.03.2004 US 803161
(71) Applicant: Battenfeld Extrusionstechnik GmbH, 32547 Bad Oeynhausen (DE)
(72) Inventor: Groeblacher, Hans, McPherson, Kansas 67460 (US); Nixon, James W., Salina, Kansas 67401 (US)

(57) **Abstract**

An extrusion die includes an inner die portion having a male form. The male form has a male complex shape with peaks and a valley. An outer die portion is included having a female form. The female form has a female complex shape with peaks and a valley which corresponds to the male complex shape of the male form. The female complex shape surrounds and is separated from the male complex shape by a gap. Flowable material is capable of being extruded through the gap between the male and female complex shapes to form a hollow profile. An adjustment mechanism is included having an outer member which surrounds the outer die portion. At least eight adjustment screws are threaded through the outer member and engage the outer die portion at equidistant angular locations. This enables controlled adjustment of the female complex shape relative to the male complex shape for adjusting the gap, and for adjusting the position and orientation of the corresponding peaks and valleys of the male and female complex shapes relative to each other.

## Description

### RELATED APPLICATION

This application claims priority to U.S. Utility Application No. 10/803,161, filed on March 17, 2004, the entire teachings of which are incorporated herein by reference.

### BACKGROUND

Extrusion dies can be used for extruding complex hollow plastic profiles. A typical extrusion die in the prior art has an inner die portion and an outer die portion where plastic is extruded through the gap between the die portions to form the plastic profile. If the extruded profile is not formed with the desired wall thickness characteristics, for example, a consistent wall thickness, the die must be taken apart and metal is removed from the die to attempt to obtain the desired wall thickness characteristics. The die is then reassembled and additional product is extruded. If the newly extruded plastic profile still does not have the desired wall thickness characteristics, the die is taken apart again and more metal is removed from the die. This process can be performed a number of times before the desired profile can be achieved. Such a process is both time consuming and inefficient.

### SUMMARY

The present invention includes an extrusion die which can be adjusted during the extrusion process so that the desired wall thickness characteristics of the extruded profile can be quickly and easily achieved.

In a particular embodiment, an extrusion die includes an inner die portion having a male form. The male form has a male complex shape with peaks and a valley. An outer die portion is included having a female form. The female form has a female complex shape with peaks and a valley which corresponds to the male complex shape of the male form. The female complex shape surrounds and is separated from the male complex shape by a gap. Flowable material is capable of being extruded through the gap between the male and female complex shapes to form a hollow profile. An adjustment mechanism is included having an outer member which surrounds the outer die portion. At least eight adjustment screws are threaded through the outer member and engage the outer die portion at equidistant angular locations. This enables controlled adjustment of the female complex shape relative to the male complex shape for adjusting the gap, and for adjusting the position and orientation of the corresponding peaks and valleys of the male and female complex shapes relative to each other.

In particular embodiments, the male complex shape of the inner die portion can be surrounded by the female complex shape of the outer die portion on all sides. The male and female complex shapes can have multiple valleys. For example, the male complex shape can have at least four peaks and two valleys. The peaks and valleys can by symmetrically divided on opposite sides of a central axis. The inner die portion can be fixed within a spider pipe and the outer member of the adjustment mechanism can be a retaining ring which secures the outer die portion to the spider pipe. The adjustment screws are threaded radially inwardly through the retaining ring to engage the outer die portion.

The present invention also includes a method of adjusting an extrusion die where the extrusion die includes an inner die portion having a male form. The male form has a male complex shape with peaks and a valley. The die includes an outer die portion having a female form. The female form has a female complex shape with peaks and a valley which corresponds to the male complex shape of the male form. The female complex shape surrounds and is separated from the male complex shape by a gap. Flowable material is capable of being extruded through the gap between the male and female complex shapes to form a hollow profile. An adjustment mechanism has an outer member which surrounds the outer die portion. At least eight adjustment screws are threaded through the outer member and engage the outer die portion at equidistant angular locations and in opposed pairs. Each opposed pair has a first and a second adjustment screw. When adjusting the die, particular opposed pairs of adjustment screws are selected where, sequentially and repeatedly, the first adjustment screw is loosened and the second adjustment screw is tightened in a pair, so that incremental lateral movement of the outer die portion relative to the inner die portion is obtained. Subsequent adjustment is made of the remaining adjustment screws to relieve compression or remove slack caused by the lateral movement. The selective incremental movement enables controlled adjustment of the female complex shape relative to the male complex shape for adjusting the gap, and for adjusting the position and orientation of the corresponding peaks and valleys of the male and female complex shapes relative to each other.

### BRIEF DESCRIPTION OF THE DRAWINGS

The foregoing and other objects, features and advantages of the invention will be apparent from the following more particular description of particular embodiments of the invention, as illustrated in the accompanying drawings in which like reference characters refer to the same parts throughout the different views. The drawings are not necessarily to scale, emphasis instead being placed upon illustrating the principles of the invention.
FIG. 1 is a perspective cross sectional view of an embodiment of an extrusion die secured to a spider pipe.
FIG. 2 is a perspective view of the extrusion die of FIG. 1 secured to the spider pipe.
FIG. 3 is a perspective view of the extrusion die of FIG. 2 with the retaining ring removed.
FIG. 4 is a side sectional view of the inner and outer die portions of the extrusion die of FIG. 1.
FIG. 5 is a front view of the extrusion die of FIG. 1.
FIG. 6 is a front view of another embodiment of an extrusion die.
FIG. 7 is a front view of a profile formed by another embodiment of the extrusion die.
FIG. 8 is a perspective view of a section of the profile of FIG. 7.
FIG. 9 is a front view of another profile formed by yet another embodiment of the extrusion die.
FIG. 10 is a perspective view of a section of the profile of FIG. 9.

### DETAILED DESCRIPTION

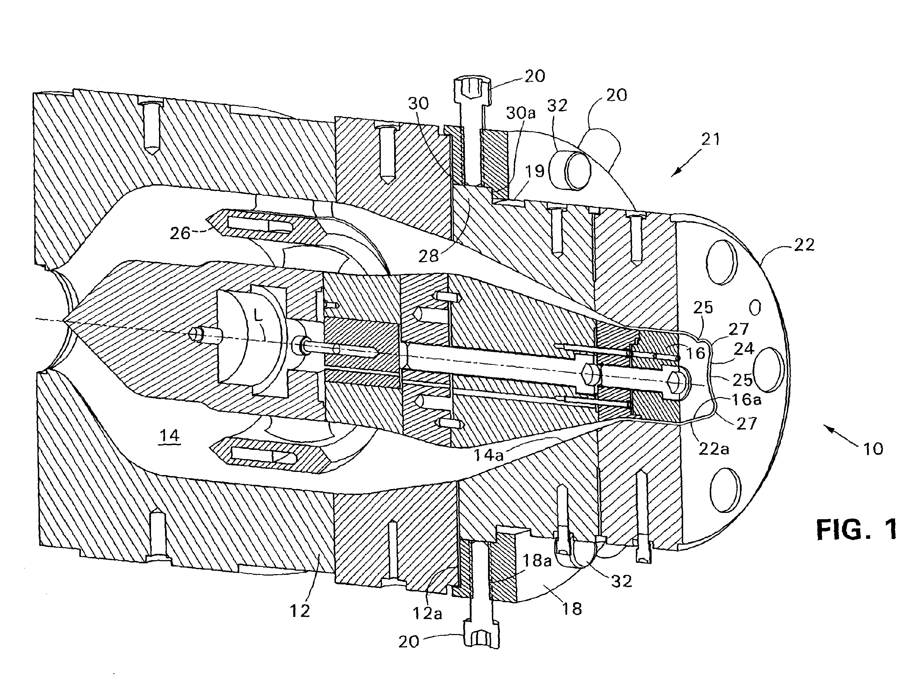

Referring to FIGS 1-5, in one embodiment of the present invention, an extrusion die 10 includes an inner die portion 16 with a complex male form 16a and an outer die portion 22 with a complex female form 22a. The female form 22a surrounds the male form 16a and is separated from the male form 16a by a complex gap 24 through which flowable material is extruded for forming extruded profiles.

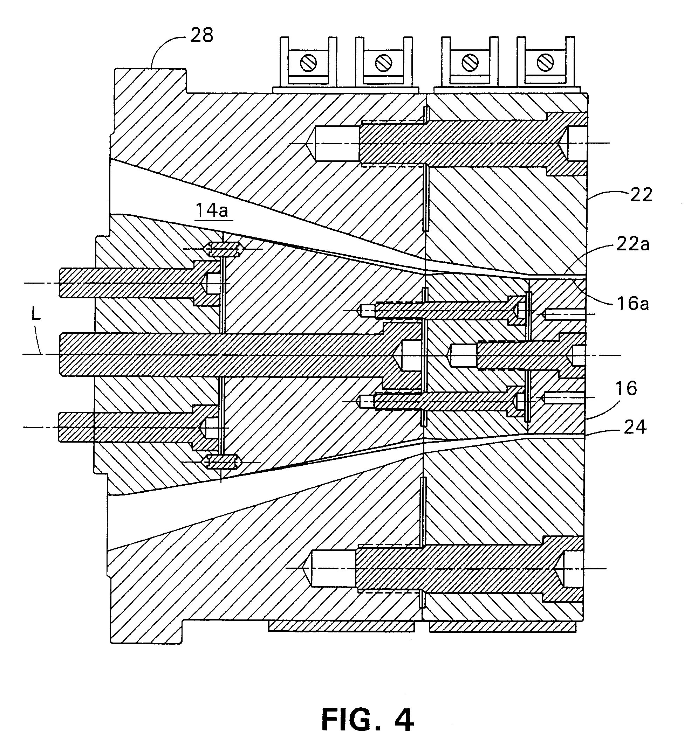

The inner die portion 16 is fixed or mounted by a spider 26 within a spider pipe 12 (FIG. 1). The inner die portion 16 extends along a longitudinal axis L within a flow passage 14 with the male form 16a extending beyond the end 12a of the spider pipe 12. Typically, the flow passage 14 of the spider pipe 12 receives molten polymer such as PVC from an extruder (not shown) and has a tapered section 14a (FIG. 4) extending into the gap 24.

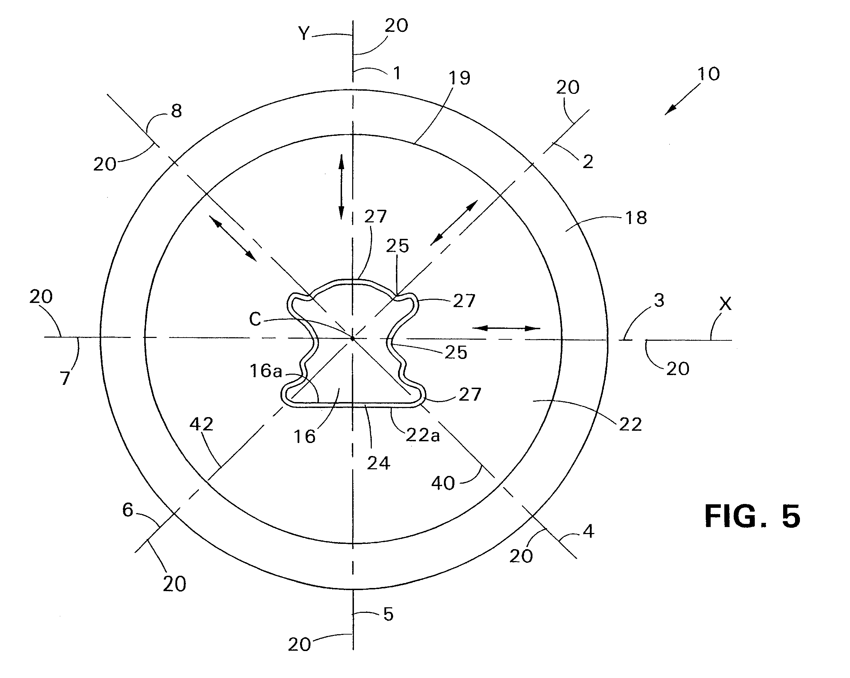

The outer die portion 22 is mounted to the end 12a of the spider pipe 12 by a retaining ring 18 which is secured to the end 12a by a series of screws 32. The outer die portion 22 has a flange 28 which is captured by an annular shoulder 30a of a bore 30 within the retaining ring 18 to trap the retaining ring 18 against the spider pipe 12. The retaining ring 18 also has an opening 19 through which the outer die portion 22 passes. The diameters of bore 30 and the opening 19 are sized to allow some lateral movement of the flange 28 and outer die portion 22. At least eight inwardly directed adjustment screws 20 extend through threaded holes 18a within the retaining ring 18 and engage against the outer surfaces of the flange 28 of the outer die portion 22. The adjustment screws 20 are positioned equidistantly about the retaining ring 18 and the flange 28, for example, in opposed pairs along four axes, a horizontal axis X, a vertical axis Y, and two 45° axes 40 and 42 (FIG. 5). The retaining ring 18 and the adjustment screws 20 form an adjustment mechanism 21 for adjusting the position of the outer die portion 22 relative to the inner die portion 16.

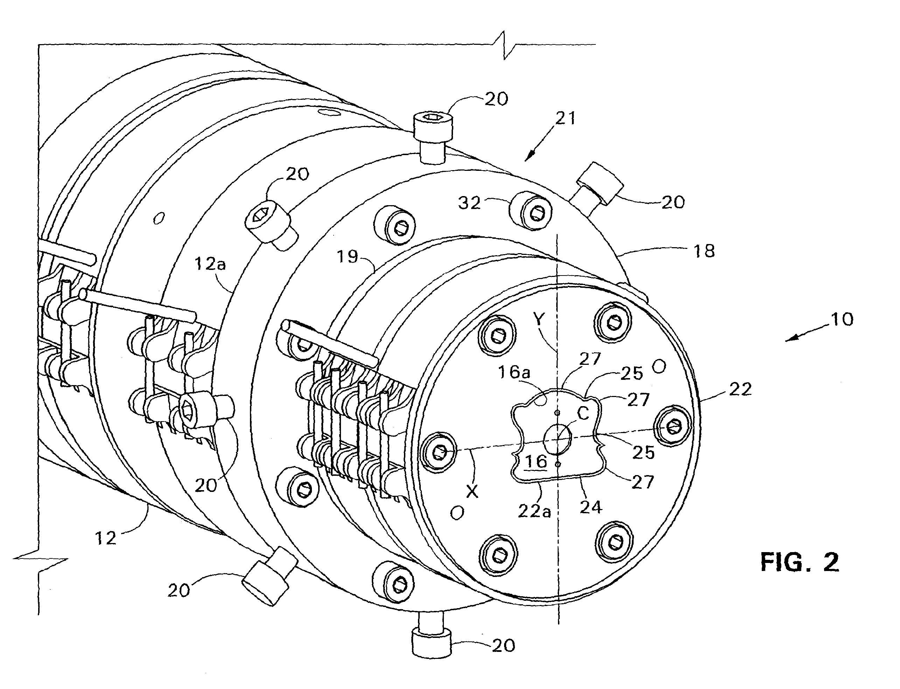

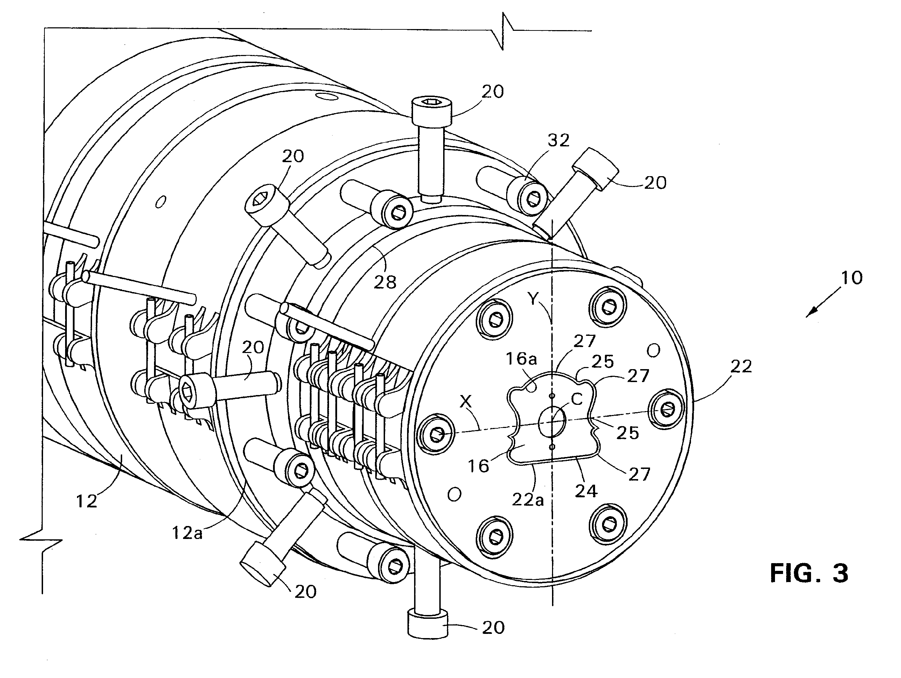

The complex male form 16a and the complex female form 22a both have multiple peaks and valleys or indented portions relative to a center point C. For example, the male form 16a and the female form 22a have multiple valleys at locations 25 and multiple peaks at locations 27. The gap 24 has a shape which corresponds to both the male form 16a on the inside and the female form 22a on the outside. The nature of the gap 24 dictates the extruded profile. In the embodiment depicted in FIGs. 2 and 3, the male 16a and female 22a forms have a vertical axis of symmetry about axis Y, where the axis Y separates mirror image sides. In this embodiment, the male 16a and female 22a forms each have at least two peaks and two valleys on each side of the axis Y, and one straddling the axis Y. In addition, the female form 22 can completely surround the male form 16a.

Although the male 16a and female 22a forms are complex, the gap 24 between the male form 16a and the female form 22a can be easily and quickly adjusted by the adjustment mechanism 21 even during the extrusion process so that a profile can be extruded through the gap 24 with the desired wall thickness characteristics. In addition, the adjustment mechanism 21 can adjust the position and orientation of the corresponding peaks and valleys of the male 16a and female 22a forms relative to each other. Such adjusting of the peaks and valleys can include adjusting the distance between the male 16a and female 22a forms laterally, as well as angular orientation relative to each other.

Referring to FIG. 5, in order to make an adjustment of the position of the outer die portion 22 relative to the inner die portion 16, opposing adjustment screws 20 along axes X, Y, 40 and 42 can be loosened and tightened to move the outer die portion 22 in either direction along those four axes as shown by the arrows. For example, in order to move the outer die portion 22 towards position 7 or to the left, along the horizontal axis X, the adjustment screw 20 at position 7 is loosened and the opposing adjustment screw 20 at position 3 is tightened. This moves the outer die portion 22 incrementally towards position 7 or to the left along axis X. The adjustment screws 20 and/or the outer die portion 22 at positions 6 and 8 can compress or deflect slightly to allow the incremental movement. Additionally, the adjustment screws 20 at adjacent positions 6 and 8 can be loosened at the same time as the adjustment screw 20 at position 7 to allow movement towards position 7. The incremental movement is typically in the thousandths of an inch. Although the adjustment screws 20 at positions 1 and 5 along the vertical axis Y might possibly lose contact with the shifted outer die portion 22, as do those at positions 2 and 4, the contact of the adjustment screws 20 at position 3 and the 45° positions 6 and 8, prevent unwanted rotation or vertical movement of the outer die portion 22 relative to the inner die portion 16 so that the movement toward position 7 is conducted along a straight path only along axis X. In order to move the outer die portion 22 further towards position 7, the previously described process is repeated. Before repeating the process, the loading of the adjustment screws 20 at positions 1, 2, 4, 5, 6 and 8 can be readjusted to relieve compression or take up or remove slack. This incremental movement of the outer die portion 22 can be conducted a number of times. In addition, such incremental movement can be also conducted along axis Y for vertical movement, or the axes 40 or 42 for 45° movement. Also, multiple adjustment screws 20 can be loosened to allow rotation of the outer die portion 22.

If the ultimate desired direction of movement is not directly on the axes X, Y, 40 or 42, then sequential incremental movement of the outer die portion 22 can be conducted along combinations of more than one axis until the desired position is achieved. Incremental rotation of the outer die portion 22 can also be achieved by sequential incremental movement along the appropriate axes and in the appropriate directions. The center point of such rotation can be varied. By making incremental adjustments of the outer die portion 22 along different axes or directions without unwanted rotation or movement, the position and orientation of the female form 22a can be adjusted relative to the male form 16a with precision so that the proper gap 24 on all sides of the male form 16a can be made. In addition, the corresponding peaks and valleys of the male 16a and female 22a forms can be properly positioned and oriented relative to each other. Prior systems have not been able to adequately adjust multiple peaks and valleys due to the complexity of such adjustments. The incremental adjustments made by adjustment mechanism 21 are capable of being made while a profile is being extruded. In some situations, outer die portion 22 might be moved vertically, horizontally and rotated.

In some embodiments, extrusion die 10 can have more than eight adjustment screws 20, for example, 10, 12, 14, or 16 adjustment screws 20, that are equidistantly spaced and positioned in opposed pairs. However, with the increasing amount of adjustment screws, the number of adjustment screw axes increases, so that adjustment of the outer die portion 22 becomes more complicated and can take more time.

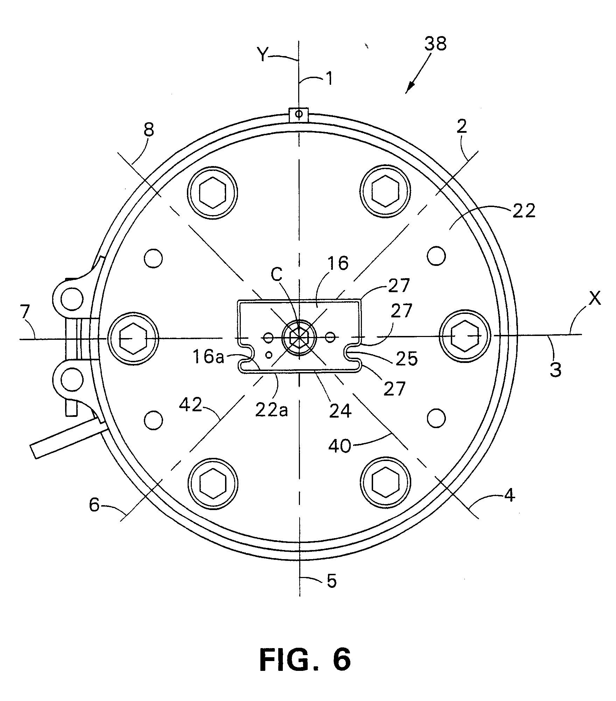

Referring to FIG. 6, extrusion die 38 is another embodiment in the present invention where the male form 16a and female form 22a are generally rectangular but have two valleys relative to center point C on opposite sides of axis Y at locations 25.

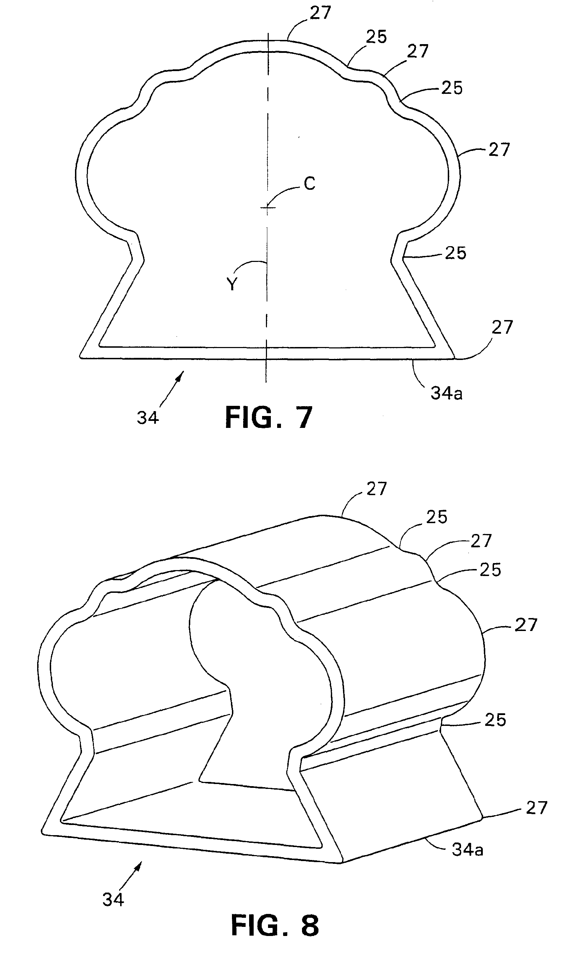

FIGs. 7 and 8 depict an example of a profile 34 that can be extruded by an embodiment of the present invention. Profile 34 is symmetrical about axis Y and has three peaks and three valleys at respective locations 27 and 25 on each side of axis Y with another peak straddling axis Y at another location 27.

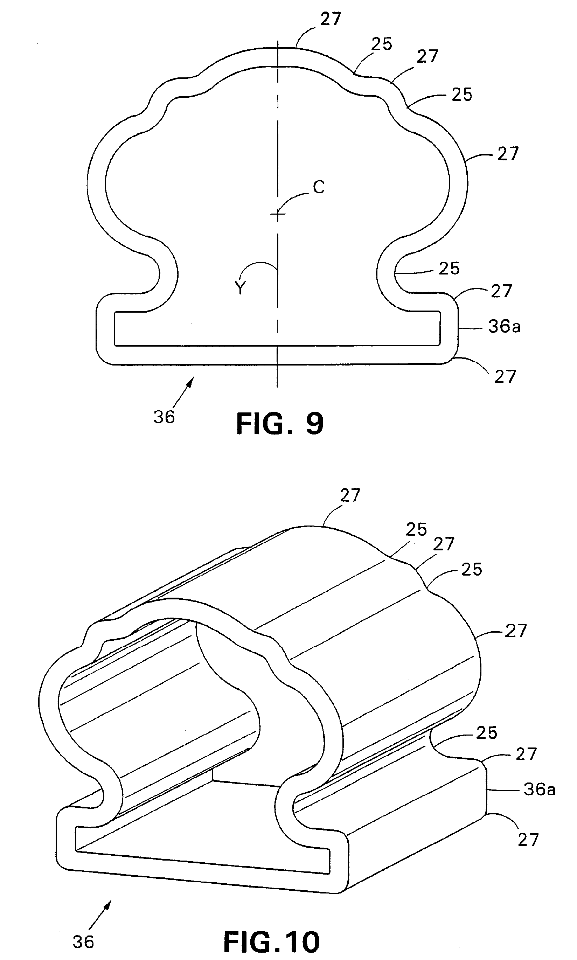

FIGs. 9 and 10 depict an example of another profile 36 that can be formed with an embodiment of the present invention. Profile 36 is similar to profile 34 but has a base 36a with two peaks on one side of axis Y while the base 34a of profile 34 has one peak. As can be seen, a variety of different complex profiles can be formed with embodiments of the present invention, such as profiles having a single valley or multiple valleys.

While this invention has been particularly shown and described with references to preferred embodiments thereof, it will be understood by those skilled in the art that various changes in form and details may be made therein without departing from the scope of the invention encompassed by the appended claims.

For example, although the extrusion die in the present invention has been described for forming a plastic or polymer profile, it is understood that other suitable flowable materials can be extruded, for example, composite materials such as a wood/plastic composite, or metals. In addition, although the terms vertical, horizontal, etc., have been used, such terms are employed for describing the present invention and are not meant to limit the orientation of the male 16a and female 22a forms.

## Claims

1. An extrusion die comprising:
an inner die portion having a male form, the male form having a male complex shape with peaks and a valley;
an outer die portion having a female form, the female form having a female complex shape with peaks and a valley which corresponds to the male complex shape of the male form, the female complex shape surrounding and being separated from the male complex shape by a gap, flowable material capable of being extruded through the gap between the male and female complex shapes to form a hollow profile; and
an adjustment mechanism comprising an outer member surrounding the outer die portion, and at least eight adjustment screws threaded through the outer member and engaging the outer die portion at equidistant angular locations to enable controlled adjustment of the female complex shape relative to the male complex shape for adjusting the gap and for adjusting the position and orientation of the corresponding peaks and valleys of the male and female complex shapes relative to each other.

2. The die of Claim 1 in which the male complex shape of the inner die portion is surrounded by the female complex shape of the outer die portion on all sides.

3. The die of Claim 1 in which the male and female complex shapes have multiple valleys.

4. The die of Claim 3 in which the male complex shape has at least four peaks and two valleys.

5. The die of Claim 4 in which the peaks and valleys are symmetrically divided on opposite sides of a central axis.

6. The die of Claim 1 in which the inner die portion is fixed within a spider pipe.

7. The die of Claim 6 in which the outer member of the adjustment mechanism is a retaining ring which secures the outer die portion to the spider pipe, the adjustment screws being threaded radially inwardly through the retaining ring to engage the outer die portion.

8. An extrusion die comprising:
an inner die portion having a male form, the male form having a male complex shape with multiple peaks and valleys;
an outer die portion having a female form, the female form having a female complex shape with multiple peaks and valleys which corresponds to the male complex shape of the male form, the female complex shape surrounding the male complex shape on all sides and being separated from the male complex shape by a gap, flowable material capable of being extruded through the gap between the male and female complex shapes to form a hollow profile; and
an adjustment mechanism comprising a retaining ring surrounding the outer die portion, and at least eight adjustment screws threaded through the retaining ring and engaging the outer die portion at equidistant angular locations to enable controlled adjustment of the female complex shape relative to the male complex shape for adjusting the gap and for adjusting the position and orientation of the corresponding peaks and valleys of the male and female complex shapes relative to each other.

9. The die of Claim 8 in which the male complex shape has at least four peaks and two valleys.

10. The die of Claim 9 in which the peaks and valleys are symmetrically divided on opposite sides of a central axis.

11. The die of Claim 8 in which the inner die portion is fixed within a spider pipe.

12. The die of Claim 11 in which the retaining ring secures the outer die portion to the spider pipe, the adjustment screws being threaded radially inwardly through the retaining ring to engage the outer die portion.

13. A method of adjusting an extrusion die, the extrusion die comprising an inner die portion having a male form, the male form having a male complex shape with peaks and a valley, and an outer die portion having a female form, the female form having a female complex shape which with peaks and a valley which corresponds to the male complex shape of the male form, the female complex shape surrounding and being separated from the male complex shape by a gap, flowable material capable of being extruded through the gap between the male and female complex shapes to form a hollow profile, and an adjustment mechanism comprising an outer member surrounding the outer die portion, at least eight adjustment screws being threaded through the outer member and engaging the outer die portion at equidistant angular locations in opposed pairs, the method comprising:
in selected opposed pairs of adjustment screws, each having a first and second adjustment screw, sequentially and repeatedly loosening the first adjustment screw and tightening the second adjustment screw of a pair to obtain incremental lateral movement of the outer die portion relative to the inner die portion and subsequently adjusting the remaining adjustment screws to relieve compression or remove slack caused by the lateral movement, the incremental movement enabling controlled adjustment of the female complex shape relative to the male complex shape for adjusting the gap, and for adjusting the position and orientation of the corresponding peaks and valleys of the male and female complex shapes relative to each other.
